**Europäisches Patentamt**

**European Patent Office**

**Office européen des brevets**

(19)

(11) Veröffentlichungsnummer: **0 142 664**
**B1**

(12) # EUROPÄISCHE PATENTSCHRIFT

(45) Veröffentlichungstag der Patentschrift:
12.08.87

(21) Anmeldenummer: **84111041.4**

(22) Anmeldetag: **15.09.84**

(51) Int. Cl.⁴: **B 29 D 30/56** //
**B29K7:00, B29K9:00, B29K9:06**

(54) **Verfahren zum Erneuern des Laufstreifens eines Reifens und zum Erneuern beschädigter Gürtel der Karkasse des Reifens.**

(30) Priorität: 16.09.83 DE 3333523

(43) Veröffentlichungstag der Anmeldung:
29.05.85 Patentblatt 85/22

(45) Bekanntmachung des Hinweises auf die Patenterteilung:
12.08.87 Patentblatt 87/33

(84) Benannte Vertragsstaaten:
AT BE CH FR GB IT LI LU NL SE

(56) Entgegenhaltungen:
AU-B-522 408
DE-A-2 545 463
GB-A-869 752
GB-A-910 715
GB-A-956 188
LU-A-38 114
US-A-2 976 910

(73) Patentinhaber: **BANDAG, INCORPORATED, Bandag Center, Muscatine, Iowa 52761 (US)**

(72) Erfinder: **Schmermbeck, Dieter, Suitberg- Weg 2b, D-4630 Bochum- Harpenn (DE)**

(74) Vertreter: **Patentanwälte Wenzel & Kalkoff, Flasskuhle 6 Postfach 2448, D-5810 Witten (DE)**

LIBER, STOCKHOLM 1987

**Beschreibung**

Die Erfindung betrifft ein Verfahren zum Erneuern des Laufstreifens eines abgefahrenen Luft- oder Vollgummireifens und zugleich zum Erneuern oder Reparieren beschädigter Gürtel der Karkasse des Reifens bei dem die beschädigten Gürtel oder Gürtelteile von der Karkasse entfernt und ersetzt werden und auf die vorbereitete Karkasse eine Schicht aus Bindekautschuk und auf diese ein vorgefertigter Gummilaufstreifen als Ganzes oder segmentweise aufgebracht wird, gasförmige Einschlüsse zwischen den aufgebrachten Schichten vermieden oder abgeführt werden und der so vorbereitete Rohling zum Vulkanisieren der Bindekautschukschicht in einem Überdruckraum einer Druck- und Wärmebehandlung bei einer Temperatur von ca. 50 - 95° C und bei einem Druck von ca. 5 - 6 bar unterworfen wird.

Unter "Heißerneuerung" wird allgemein und so auch im folgenden ein Runderneuerungs- und Reparaturverfahren verstanden, bei dem der Rohkautschuk in einem Bereich von 130-195° C und bei einem Druck von ca. 20-50 bar vulkanisiert wird. Die Vulkanisation findet in einer Form statt, in der die ringsum auf die Karkasse aufgebrachte Kautschukschicht zu dem gewünschten Laufprofil geformt und verdichtet sowie fest mit der Karkasse verbunden wird. Die Nachteile der Heißerneuerung, nämlich hohe Formkosten, hohe Investitionskosten für eine Mindestausstattung an Formen, dennoch beschränkte Auswahl an verschiedenen Reifengrößen und -Breiten sowie Laufstreifenprofilen, hoher Verschleiß des erneuerten Laufstreifens wegen relativ geringer Verdichtung der Gummistruktur und/oder Stauchung der Karkasse bei hohem Druck sind hinlänglich bekannt.

Das eingangs als bekannt angegebene Verfahren, bei dem mit hohem Druck in Pressen vorgefertigte Gummilaufstreifen, Gummisegmente oder Gummistollen durch Vulkanisation einer Bindekautschukschicht fest mit der Karkasse verbunden werden, wird wegen der relativ niedrigen Vulkanisationstemperatur als "Kalterneuerungsverfahren" bezeichnet.

Hohe Rohstoffpreise und das Bestreben, mehr abgefahrene Reifen als bisher durch Reparatur oder Erneuerung des Laufstreifens wieder nutzbar zu machen, veranlassen die Runderneuerungsbetriebe, in zunehmendem Maße auch Reifen rundzuerneuern, an denen ein oder mehrere Gürtel beschädigt sind.

In der Heißerneuerung wird die Gürtelerneuerung seit einiger Zeit angewendet, jedoch sind dort die vorstehend geschilderten Nachteile in Kauf zu nehmen, die dieser Erneuerungsweise eigen sind. Auch in der Kalterneuerung sind bereits Versuche zur Gürtelerneuerung durchgeführt worden. Die Ergebnisse sind bisher unbefriedigend, und der für eine zuverlässige Gürtelerneuerung erforderliche Arbeitsaufwand ist zu hoch.

In der Heißerneuerung werden dünn mit Rohgummi überzogene Metallgürtel verschiedenster Breiten nach Abtragen der beschädigten Gürtellagen in Naturkautschuk oder Synthesekautschuk eingebettet auf die Karkasse aufgebracht, die anschließend in üblicher Weise mit Rohkautschuk belegt wird, um den so vorbereiteten Reifen als Ganzes in einer Form mit dem vorgenannten hohen Temperatur- und Druckniveau abzuheizen.

In der Kalterneuerung ist ein mehrstufiges Verfahren der eingangs genannten Art zur Gürtelerneuerung bekannt (DE-A-2 545 463). Dabei wird zunächst ein mit Rohgummi überzogener Gürtel beidseitig mit Rohkautschuk belegt und in einer Flachpresse mit entsprechend hohem Temperatur- und Druckniveau abgeheizt, um den Gürtel auf beiden Seiten mit einer ausreichend dicken ausvulkanisierten Gummischicht zu verbinden, an der eine Rauh- oder Bindefläche ausgebildet werden kann. Diese läßt sich entweder dadurch erzeugen, daß man die Rohkautschukschichten vor dem Vulkanisieren in der Flachpresse mit einem abziehbaren Gewebe belegt. Der Gewebeabdruck bildet die Rauhfläche, wenn das Gewebe nach dem Vulkanisieren abgezogen wird. Oder man unterwirft den beiderseits mit einer Gummischicht versehenen Gürtel anschließend in einem zweiten Verfahrensschritt einem beiderseitigen mechanischen Rauhvorgang durch Schleifen etc. zur Erzielung der gewünschten Rauhfläche. Der so in der einen oder in der anderen Weise vorbereitete Gürtel läßt sich dann in einer entsprechenden Bindekautschukeinbettung auf die vorbereitete Karkasse aufbringen, worauf das Belegen mit dem vorgefertigten Laufstreifen und schließlich das Abheizen im Überdruckraum bei niedrigem Temperatur- und Druckniveau erfolgt.

Dieses Verfahren läßt zwar eine zuverlässige und sichere Gürtelerneuerung bei gleichzeitiger Runderneuerung zu, aber die Vielzahl der notwendigen Schritte verursacht einen zu hohen Arbeitsaufwand.

Der Erfindung liegt die Aufgabe zugrunde, die Erneuerung oder Reparatur beschädigter Gürtel in der Kalterneuerung zu vereinfachen.

Zur Lösung dieser Aufgabe wird erfindungsgemäß vorgesehen, daß, ausgehend von dem eingangs genannten Kalterneuerungsverfahren, mindestens ein Abschnitt eines an sich für die Heißerneuerung bestimmten mit Rohgummi überzogenen Gürtels durch ein- oder mehrmaliges Auftragen einer auf den Bindekautschuk abgestimmten Beschleunigerlösung behandelt wird, mit der der Rohgummiüberzug des Gürtels für die Vulkanisation unter den für die Vulkanisation des Bindekautschuks zur Anwendung kommenden vorstehend genannten Druck- und Wärmebedingungen umgewandelt wird, oder daß ein Abschnitt eines in dieser Weise bereits vorbehandelten und zwischengelagerten Gürtels verwendet wird, der so vorbereitete Abschnitt mit einer Bindekautschukeinbettung versehen und an der Stelle des oder der entfernten Gürtel(s) auf die Karkasse aufgebracht wird, und hierauf der Schichtaufbau aus der Bindekautschukschicht und dem Laufstreifen gebildet wird und der Rohling nachfolgend der genannten Druck- und Wärmebehandlung zwecks Vulkanisation sowohl der Bindekautschukschicht als auch der Bindekautschukeinbettung und des Rohgummiüberzugs des oder der Gürtel(s) ausgesetzt wird.

Es gibt bisher keine mit Rohgummi überzogene Gürtel, die auf dem in der Kalterneuerung üblichen niedrigen Temperatur- und Druckniveau mit ausreichender Gummi- Metallhaftung vulkanisierbar sind.

Die erfindungsgemäße Lösung geht daher von der erfinderrischen Erkenntnis aus, daß an sich für die Neureifenherstellung und für die Heißerneuerung bestimmte, mit Rohgummi überzogene Gürtel bzw. Verstärkungseinlagen aus Metalldraht, Kunststoffgewebe etc. einer einfachen Behandlung, also nicht einem mehrstufigem Vorverfahren, wie eingangs geschildert, zu untersiehen sind, um die Gürtel an die Verarbeitungsbedingungen von handelsüblichem, für die Kalterneuerung bestimmtem Bindekautschuk anzupassen, also ein von ihrem eigentlichen Bestimmungszweck abweichende Verarbeitung zuzulassen.

Die Erfindung sieht eine, vom erforderlichen Arbeitsaufwand her gesehen, äußerst einfache Behandlung der vorstehenden Art vor, mit der eine Umwandlung des Rohgummiüberzugs erfolgt, die eine sehr einfache Verarbeitung des so behandelten Gürtelmaterials in der Kalterneuerung ermöglicht, ohne daß das Ergebnis der Gummi-Metallhaftung eine Einschränkung erfährt.

Diese Behandlung besteht im Auftragen einer Lösung auf den Rohgummiüberzug des Gürtels mit dem Ergebnis, daß der Rohgummiüberzug mit einer für die Kalterneuerung üblichen Druck- und Wärmebehandlung einer Temperatur unter 95°C und bei einem Druck von 5 - 6 bar vulkanisierbar wird. Die Lösung bewirkt unter anderem eine Beschleunigung der Vulkanisationszeit des Rohgummiüberzugs, so daß die Bezeichnung Beschleunigerlösung gewählt wurde.

Ein mit einer geeigneten Beschleunigerlösung behandelter Abschnitt eines derartigen mit Rohgummi überzogenen Gürtels wird nach Entfernung des oder der beschädigten Gürtel auf die Karkasse aufgebracht, worauf das Belegen der Karkasse mit der üblichen Bindekautschukschicht und mit dem vorgefertigten Laufstreifen und schließlich das Abheizen des so vorbereiteten Reifens bei niedrigem Temperatur- und Druckniveau erfolgt.

Das erfindungsgemäße Verfahren kann wahlweise Anwendung finden bei der Runderneuerung oder Reparatur von Reifen mit Gürtelerneuerung oder Teilgürtelerneuerung oder bei der ausschließlichen vollständigen oder teilweisen Erneuerung von Gürteln an Karkassen oder bei der Herstellung von Reparaturpflastern mit Gürteleinlage.

Mit anderen Worten ist ein mit Rohgummi überzogener Gürtelabschnitt bei gleichem Ausgangsmaterial nach Durchführung der erfinungsgemäßen Behandlung mit Beschleuniger lösung so verwendbar, wie es ein in aus der DE-A-2 545 463 bekannter Weise mit beidseitiger Rohkautschukbeschichtung in einer Presse abgeheizter Gürtelabschnitt nach Erzeugung von Rauhflächen an der Ober- und Unterseite des Gürtels ist. Hier liegt ein entscheidender Vorteil des erfindungsgemäßen Verfahrens, soweit die bisher bekannte Gürtelerneuerung in der Kalterneuerung betroffen ist. Denn durch bloßes Einstreichen herkömmlicher, handelsüblicher, mit einem Rohgummiüberzug versehener Gürtel lassen sich diese ohne weiteres als untere Schichten in den in der Kalterneuerung üblichen Schichtaufbau einbeziehen, der als Ganzes in einem einzigen Druck- und Wärmeprozeß abheizbar ist. Auf diese Weise ist die Verarbeitung des Gürtelmaterials, wenn die erfindungsgemäße Behandlung durchgeführt worden ist, ähnlich wie in der Heißerneuerung, ohne daß jedoch die erheblichen Nachteile der Heißerneuerung in Folge des für die Karkasse schädlichen hohen Druck- und Temperaturniveaus in Kauf genommen werden müssen und schließlich ohne Notwendigkkeit der Bereitstellung und Benutzung teurer Formen.

Da in den heute üblichen Kalterneuerungs-Systemen ein Bindekautschuk von mehr oder weniger abweichender Zusammensetzung verwendet wird, hat der Fachmann die jeweils erforderliche Zusammensetzung der Beschleunigerlösung in Abhängigkeit von dem zur Anwendung kommenden Bindekautschuk zu bestimmen. Die notwendigen Substanzen lassen sich bereichsweise angeben, und der Fachmann hat aus diesen Bereichsangaben jeweils die für den zur Verwendung kommenden Bindekautschuk passende genaue Zusammensetzung zu bestimmen, beispielsweise im Versuch.

Wenn beispielsweise für die Bindekautschukschicht unterhalb des Laufstreifens und für die Einbettung eines oder mehrerer Abschnitte des Gürtelmaterials ein Bindekautschuk verwendet wird, der im wesentlichen folgende Zusammensetzung aufweist:

| | |
|---|---|
| Naturkautschuk oder SBR oder Polybutadyn oder Verschnitt oder eine Mischung aus den vorgenannten Stoffen | 100,00 Gew.Teile |
| Kieselsäure und Ruß | 30-80 Gew.Teile |
| Weichmacher | 5-10 Gew.Teile |
| Schwefel oder Schwefelspender | 0,8-4,5 Gew.Teile |
| Alterungsschutzmittel | 0,8-4,0 Gew.Teile |
| Beschleuniger | 0,5-3,5 Gew.Teile |
| Koresin | 1,0-15,0 Gew.Teile, |

soll die Beschleunigerlösung vorteilhafterweise im wesentliche folgende Zusammensetzung aufweisen:

| 1000 gr. | Reintoluol |
| 20-240 gr. | Beschleuniger I (Tetramethylthiuram-monosulfid wie Vulcacit Thiuram MS [R] der Farbenfabriken Bayer) |
| 10-180 gr. | Beschleuniger II (N,N'-Diphenyl-thioharnstoff wie Rhenocure [R]Ca der Firma Rhein-Chemie Rheinau GmbH) |
| 0-300 gr. | Schwefel-normal |
| 0-500 gr. | Alterungsschutzmittel (N-Phenyl-N'isopropyl-p-phenylendiamin wie 4010 NA der Farbenfabriken Bayer). |

Ausgehend von den vorstehenden Bereichsangaben für die Zusammensetzung der Beschleunigerlösung sollte in Verbindung mit dem vorstehend angegebenen Bindekautschuk eine Beschleunigerlösung folgender Zusammensetzung verwendet werden:

| 1000 gr. | Reintuluol |
| 120 gr. | Beschleuniger I |
| 60 gr. | Beschleuniger II |
| 30 gr. | Schwefel-normal |
| 180 gr. | Alterumgsschutzmittel 4010 NA |

Die Beschleunigerlösung ist grundsätzlich bis zur Sättigung des Rohgummiüberzugs auf diesen aufzutragen. Die Behandlung läßt sich besonders leicht durchführen, wenn die Beschleunigerlösung nach ihrer Herstellung im gewichtsbezogenen Verhältnis von 10 : 80 mit Reintoluol verdünnt wird.

In erfindungsgemäßer Weise mit Beschleunigerlösung behandeltes Gürtelmaterial ist je nach Art des Rohgummis und der Beschleunigerlösung ca. 6 Monate lagerfähig. Deshalb lassen sich für die Gürtelerneuerung fertig vorbereitete Gürtel ohne weiteres auf Lager halten. Fertig vorbereitetes Gürtelmaterial ist entweder vom Runderneuerer selbst herstellbar, sofern die notwendigen Voraussetzungen für die Herstellung im Betrieb gegeben sind, oder alternativ gleich von den Herstellern von Runderneuerungsmaterial, die die erforderliche Anpassung der Beschleunigerlösung an den in dem jeweils angewendeten System üblichen Bindekautschuk und die Behandlung des Gürtelmaterials mit einer geeigneten Beschleunigerlösung und schließlich die Lieferung an Runderneuerungsbetriebe, vornehmen. Deshalb ist die Erfindung auch auf die Herstellung von mit Rohgummi überzogenem Gürtelmaterial gerichtet, das ursprünglich für die Gürtelerneuerung oder -Reparatur an Reifenkarkassen im Rahmen eines Heißerneuerungsverfahrens ausgelegt ist und dessen Besonderheit darin besteht, daß der Gürtel mit einer Beschleunigerlösung behandelt wird, mit der der Rohgummi des Gürtels derart umwandelbar ist, daß er mittels einer für eine Vulkanisation eines in der Kalterneuerung verwendeten Bindekautschuks üblichen Druck- und Wärmebehandlung vulkanisierbar ist.

Auch die Pflasterherstellung aus mit Rohgummi überzogenem Stahlcord oder Nylongewebe insbesondere für LKW-Reifen und für Großreifen, wie sie für Erdbewegungsmaschinen gebraucht werden, ist nach dem erfindungsgemäßen Verfahren möglich. Pflaster jeder Größe und Stärke sowie Winkellage der Metalldrähte bzw. Kunststofffäden sind so herstellbar.

Andernfalls müssen handelsübliche Pflaster vom Runderneuerer auf Lager gehalten werden, wobei ihm häufig für die jeweilige Reparatur Pflaster geeigneter Größe und Stärke fehlen. Außerdem müssen die Pflaster bisher vor der Aufbringung bearbeitet, nämlich an den Rändern gerauht werden. Deshalb ist eine einfache Pflasterherstellung im Runderneuerungsbetrieb selbst sehr vorteilhaft.

Erfindungsgemäß wird daher ein Verfahren zum Herstellen von Reparaturpflastern mit Gürteleinlage für Reifen vorgeschlagen, die an der Reparaturstelle der Karkasse aufgelegt und in einem Arbeitsgang allein oder mit dem übrigen Schichtaufbau gemeinsam, falls gleichzeitig die Erneuerung des Laufstreifens stattfindet, bei einem niedrigen Temperatur- und Druckniveau in den Bereichen von ca. 50 - 95° C und ca. 5 - 6 bar abgeheizt werden, und wobei die Besonderheit des Verfahrens darin besteht daß mindestens ein Abschnitt eines mit Rohgummi überzogenen und an sich zur Verarbeitung unter Heißerneuerungsbedingungen bestimmten Gürtels mit einer Beschleunigerlösung, die eine der oben angegebenen Zusammensetzungen haben kann, behandelt und, gegebenenfalls nach einer Zwischenlagerung, an einer Seite mit einer Bindekautschukschicht verbunden wird, deren Zusammensetzung wie weiter oben angegeben sein kann. Falls erforderlich, werden bei der Herstellung der Pflaster mehrere Abschnitte bis zum Erreichen der gewünschten Pflasterstärke übereinander gelegt. Eine besonders zuverlässige Verbindung übereinanderliegender Abschnitte ergibt sich, wenn zwischen diese Abschnitte jeweils eine Bindekautschukschicht gelegt wird. Außerdem soll das Pflaster an der anderen Seite mindestens am Rand mit Bindekautschuk belegt sein.

Die Erfindung ermöglicht auch das Einarbeiten zusätzlicher Schutzlagen aus in erfindungsgemäßer Weise behandelten Gürtelabschnitten im Zuge eines Runderneuerungsverfahrens. Zusätzliche Schutzlagen machen die Reifen unempfindlich gegen Durchschläge, speziell beim Einsatz der Reifen auf Schrottplätzen oder dergleichen. Zusätzliche Schutzlagen lassen sich auch zwischen die profillosen Platten von profillosen Reifen einbringen, wenn diese lagenweise aufgebaut werden.

Außerdem ermöglicht die Erfindung das Einbringen von Schulterbandagen durch Verwendung von

4

Gürtellagen mit 0° Fadenwinkel, um eine Reduzierung des Rollwiderstands zu erreichen.

Insofern eröffnet das erfindungsgemäße Verfahren fur die Kalterneuerung vielseitige Anwendungsmöglichkeiten und Behandlungen sowie Verbesserungen parallel zur Runderneuerung eines Reifens, die bisher nicht oder nur mit unverhältnismäßig hohem Aufwand möglich sind.

Im folgenden werden Ausführungsbeispiele der Erfindung näher erläutert:

Wenn bei der Erneuerung des Laufstreifens eines abgefahrenen Luft- oder Vollgummireifens auch eine Gürtelerneuerung erfolgen soll, werden zunächst die beschädigten Gürtel von der Karkasse des Reifens entfernt.

Dann wird der benötigte Gürtelabschnitt aus handelsüblichem, an sich für die Heißerneuerung bestimmtem mit Rohgummi überzogenem Gürtelmaterial in entsprechender Länge zugeschnitten. Bei Entfernung mehrerer Gürtellagen wird eine entsprechende Anzahl von Gürtelabschnitten vorbereitet.

Sodann wird der Gürtelabschnitt mit einer Beschleunigerlösung, die noch erläutert wird, bis zur Sättigung getränkt, wobei die Beschleunigerlösung z. B. im Tauchbad oder mit einem Pinsel oder mit einer Spritzpistole beidseitig auf den Rohgummi des Gürtelabschnitts aufgetragen wird. Nach ca. 30 Minuten ist die Beschleunigerlösung eingezogen und an der Oberfläche des Rohgummiüberzugs abgetrocknet, so daß der Gürtelabschnitt zur Weiterverarbeitung im Wege der Kalterneuerung nach einem der hierfür bekannten Systeme fertig vorbereitet ist.

Die Vorbereitung der Gürtel, also das Einstreichen mit Beschleunigerlösung, kann jedoch auch von Gürtellieferanten selbst vorgenommen werden, so daß der Runderneuerer fertig vorbereitetes Gürtelmaterial bezieht und seinerseits nur noch Abschnitte in jeweils benötigter Größe von dem Endlosmaterial abzuschneiden braucht. Denn das vorbereitete Gürtelmaterial ist bei entsprechender Einstellung der Beschleunigerlösung ohne weiteres 6 Monate lang lagerfähig bei einer Raumtemperatur von ca. 20-23° C.

Der so behandelte Gürtelabschnitt wird nun auf die vorbereitete Karkasse, die zweckmäßig mit einer dünnen Bindekautschukschicht belegt ist, aufgebracht. Auf jeden Fall soll der Gürtelabschnitt auf der Karkasse oder bereits vor dem Aufbringen eine Bindekautschukeinbettung erhalten.

Die Gürtelabschnitte können aus schmalen oder auch aus breiten Gürteln bestehen. Handelsübliche Gürtel in Breiten von 90 mm - 220 mm stehen mit Fadenwinkeln von 18 - 22° zur Verfügung. Je nach Breite der Karkasse können mehrere schmale Gürtel, vorzugsweise mit Überlappung, gegebenenfalls auch nur ein breiter Gürtel etc. verwendet werden.

Für EM-Reifen größerer Breite reicht die Breite handelsüblicher Gürtel ohnehin nicht aus, so daß mehrere Gürtel aneinanderzulegen sind und die nächstfolgende Gürtellänge mit Überdeckung der Stoßstellen durch entsprechendes Versetzen in Breitenrichtung gebildet wird.

Auf die auf die Karkasse aufgebrachten Gürtel wird anschließend die in der Kalterneuerung übliche Bindekautschukschicht, die die Bindung zwischen der Karkasse und einem Laufstreifen herstellen soll, aufgebracht.

Danach erfolgt das Aufbringen des vorgefertigten Laufstreifens als Ganzes oder segmenteweise oder auch stollen weise, je nach Größe und Breite der Reifen und Profile.

Es ist darauf zu achten, daß sich bei der Bildung des Schichtaufbaus auf der Karkasse keine Lufteinschlüsse bilden, oder daß diese, falls sie zunächst nicht zu vermeiden sind, wieder entfernt werden.

Danach erfolgt das Abheizen der so belegten Karkasse im Üerdruckraum mit einer in der Kalterneuerung üblichen Druck- und Wärmebehandlung bei einer Temperatur unter 95° C und bei einem Druck von ca. 5 - 6 bar. Dabei kann die Karkasse von einer Hülle umschlossen sein, es kann jedoch auch ein sogenanntes hüllenloses Verfahren angewendet werden. In jedem Falle geht der Bindekautschuk eine unlösbare Verbindung mit der Karkasse sowie mit dem Rohgummiüberzug der Gürtelabschnitte und in üblicher Weise mit dem Laufstreifen selbst ein.

Mit anderen Worten wird der auf die Karkasse neben dem Bindekautschuk und dem vorgefertigten Laufstreifen aufgebrachte Gürtel in einem einzigen Arbeitsgang bei gleichzeitiger Erneuerung der Lauffläche durch den neuen vorgefertigten Laufstreifen in genau vorher bestimmter Lage unlösbar in die Karkasse eingearbeitet.

Das zur Herstellung der Beschleunigerlösung und zu deren Verdünnung verwendete Reintoluol hat vorzugsweise folgende Zusammensetzung:

| | |
|---|---|
| Molgewicht | 92 |
| Farbe (Saybolt) | + 30 |
| Dichte bei 15°C, g/CM$^3$ | 0,871 |
| Siedepunkt (-bereich), bei | |
| 1013 mbar (760 Torr), °C | 1,0 inkl. 110,6 |
| Verdunstungszahl (Äther = l) | 6 |
| Erstarrungspunkt, °C | - |
| Doktor-Test | negativ |
| Korrosion (Cu) | negativ |
| Kauri-Butanol-Wert | 1-2 |
| $H_2S + SO_2$ | frei |
| Flammpunkt, °C | + 5 |
| Dampfdruck bei 25°B, mbar | |
| (1 mbar = 0,75 Torr) | 38 |
| Oberflächenspannung bei 20°C, | |
| mN/m (dyn/cm) | 28 |
| kinematische Viskosität, | |
| $10^{-6}m^2/s$ (cSt) bei 20°C | 0,68 |

Die Beschleunigerlösung ist in dunklen Flaschen oder Behältern aufzubewahren, da sie sich bei Sonnenlichteinstrahlung zersetzen kann. Zur Erhaltung der Klebekraft von mit Beschleunigerlösung behandeltem Gürtelmaterial, die für die spätere Bindung von Bedeutung ist, ist das Gürtelmaterial luftdicht in Folie einzuwickeln.

Von den Wirkungen der Beschleunigerlösung sei noch hervorgehoben, daß sich auch dann, wenn eine Ubervulkanisation eintritt, kein Abfall der Haftwerte des Gummiüberzugs ergibt, da für die Vulkanisation ein niedriges Temperaturniveau benutzt wird. Der Gummiüberzug des Gürtelmaterials erhält durch die Behandlung mit Beschleunigerlösung darüber hinaus einen zusätzlichen Alterungsschutz.

Bei der Herstellun9 von Pflastern zu Reparaturzwecken wird folgendermaßen vorgegangen:

Zunächst wird Bindekautschuk in einer Stärke von 1 - 2 mm ausgewalzt. Die einzelnen Pflasterlagen werden von dem mit Rohgummi überzogenen Gürtelmaterial zugeschnitten und mit Beschleunigerlösung eingestrichen. Nach dem Abtrocknen innerhalb von ca. 30 Minuten werden die Gürtelabschnitte in der jeweils gewünschten Winkellage und Anzahl übereinandergelegt, wobei zwecks Stabilisierung auch zwischen den einzelnen Pflasterlagen eine Bindekautschukschicht von ca. 1 mm gelegt werden kann. Das schichtweise aufgebaute Pflaster wird auf die ausgewalzte Bindekautschukplatte gelegt, und abschließend wird der Pflasterrand oder das ganze Pflaster auf der anderen Seite mit einer Bindekautschukschicht von 1 - 2 mm abgedeckt. Die Pflaster sind ebenfalls lagerfähig, und sie können in einem Arbeitsgang mit rundzuerneuernden Reifen abgeheizt werden, wobei als Heizmedium Wasser oder ein Dampf- Luftgemisch verwendet werden kann. Die Temperatur soll ca. 95°C und der Druck 5 - 6 bar betragen.

Es sei ausdrücklich darauf hingewiesen, daß erfindungsgemäß eine Beschleunigerlösung der oben angegebenen Art auch zur bloßen Beschleunigung der Vulkanisation von vor allem in der Kalterneuerung verwendetem Bindekautschuk, natürlich in entsprechender Einstellung hierfür, zum Zweck der Heizzeitverkürzung und Energieeinsparrung oder zur Heiztemperatursenkung verwendet werden kann. Auf diese Weise sind bei entsprechender Einstellung auch sogenannte selbstvulkanisierende Bindekautschukmischungen erreichbar.

Von den Gummifabriken werden bei der Herstellung von Stahlgürteln mit Rohgummiüberzug für die Rohgummimischung vor allem zwei Mischungssysteme bevorzugt, die mit "Co-System" und mit "RFS-System" bezeichnet werden. Das Co-System enthält Co-Naphthenat als Haftvermittler, und das RFS-System benutzt hierfür Resorcin, Hexamethylentetramin in Verbindung mit Kieselsäurefüllstoff. Mit letzterem System ist eine bessere Alterungsbeständigkeit erreichbar, während die Gummi-Metallhaftung geringfügig niedrigere Werte zeigt, während die Verhältnisse beim Co-System umgekehrt liegen.

Typische Rohgummimischungen für Stahlgürtelüberzüge der beiden Systeme haben beispielsweise folgende Zusammensetzung:

|  | Co-System | RFS-System |
|---|---|---|
| NR-RSS 1 | - 100,00 Gew.Teile | 100,00 Gew.Teile |
| Stearinsäure | - 1,50 Gew.Teile | 1,50 Gew.Teile |
| Weichmacher, aromatisch | - - | 2,50 Gew.Teile |
| Haerusen | - 2.00 Gew.Teile | 2,00 Gew.Teile |
| Zinkoxid | - 8,00 Gew.Teile | 8,00 Gew.Teile |
| Ruß - N 330 | - 60,00 Gew.Teile | 48,00 Gew.Teile |
| ASM-IPPD | - - Gew.Teile | 2,50 Gew.Teile |
| ASM-PBN | - 2,00 Gew.Teile | - Gew.Teile |
| Co-Naphthenat 8 % | - 3,00 Gew.Teile | - Gew.Teile |
| Resorcin | - - | 2,50 Gew.Teile |
| Hexmethylentetramin | - - Gew.Teile | 1,50 Gew.Teile |
| Kieselsäurefüllstoff | - - Gew.Teile | 15,00 Gew.Teile |
| Bescheuniger DCBS | - 0,70 Gew.Teile | 0,70 Gew.Teile |
| Schwefel - unlöslich 80 % | - 5,00 Gew.Teile | 5,00 Gew.Teile |
|  | 182,20 Gew.Teile | 189,20 Gew.Teile |

Ein Stahlgürtelüberzug, der ebenso wie die beiden vorerwähnten Mischungen erfindungsgemäß einsetzbar ist und dem Co-System angehört, jedoch mit etwas abgewandelter Zusammensetzung wird mit den physikalischen Werten im folgenden angegeben, die sich bei einer Vulkanisation von 20 min. bei einer Temperatur von 150°C ergeben:

| NR-RSS3 | - 100,00 Gew.Teile | Zugfestigkeit in MPa | = 17 |
|---|---|---|---|
| Stearinsäure | - 1,00 Gew.Teile | Dehnung in % | = 420 |
| Kolophonium | - 1,50 Gew.Teile | Modul-300 in MPa | = 11 |
| Zinkoxid | - 10,00 Gew.Teile | Weiterreißwiderstand |  |
| Ruß-N 330 | - 50,00 Gew.Teile | in KN/m | = 17 |
| Co-Naphthenat | - 2,50 Gew.Teile | Härte in Sh-A | = 64 |
| ASM - IPPD | - 2,00 Gew.Teile | Elastizität bei 70°C |  |
| Beschleuniger MBS | - 0,70 Gew.Teile | in % | = 58 |
| Schwefel Su | - 4,70 Gew.Teile | HBU Δ T in K | = 25 |
|  | 172,40 Gew.Teile |  |  |

Ein typischer Rohgummiüberzug für einen LKW-Radialreifen mit Textilgürtel, der sich gleichfalls für die erfindungsgemäße Behandlung eignet, hat folgende Zusammensetzung, und nach einer Vulkanisation von 20 min. bei einer Temperatur von 150°C ergeben sich folgende physikalische Werte:

| NR-RSS3 | - 100,00 Gew.Teile | Zugfestigkeit in KPa | = 18 |
|---|---|---|---|
| Stearinsäure | - 2,50 Gew.Teile | Dehnung in %, | = 380 |
| Kolophonium | - 1,50 Gew.Teile | Modul-300 in MPa | = 8 |
| Haerusen | - 0,20 Gew.Teile | Weiterreißwiderstand |  |
| Pinienteer | - 6,00 Gew.Teile | in KN/m | = 18 |
| Zinkoxtd | - 8,00 Gew.Teile | Härte in Sh-A | = 71 |
| Ruß-N 330 | - 55,00 Gew.Teile | Elastizität bei 70°C |  |
| ASM-IPPD | - 1,00 Gew.Teile | in % | = 51 |
| ASM-PBN | - 1,00 Gew.Teile | HBU Δ T in K | = 39 |
| Beschleuniger MBS | - 1,40 Gew.Teile |  |  |
| Schwefel Su | - 4,00 Gew.Teile |  |  |
|  | 180,60 Gew.Teile |  |  |

Vergleichsversuche mit je einem Reversionstest in einem Monsanto-Rheometer 100 mit für die Neureifenherstellung oder die Heißerneuerung bestimmtem Stahlgürtelmaterial bzw. mit einer Rohgummimischung für den Überzug dieses Materials aus dem obigen Co-System (= Mischung 1) sowie dem gleichen Material, jedoch nach vorheriger erfindungsgemäßer Behandlung mit der angegebenen erfindungsgemäßen Beschleunigerlösung, (= Mischung 2) und mit einem üblichen für die Kalterneuerung bestimmten Bindekautschuk, dessen Zusammensetzung vorstehend mehrfach angegeben ist, (Mischung 3), wobei die Vulkanisationstemperatur 170°C betrug, ergab jeweils den aus der beigefügten grafischen Darstellung ersichtlichen Verlauf. Mischung 1 zeigt einen allmählich ansteigenden Verlauf. Demgegenüber erreicht die Mischung 2 das Plateau etwa in der Hälfte der Zeit, die Mischung 1 braucht, allerdings ohne Veränderung der Reversionswerte im weiteren Verlauf. Das bedeutet, daß Mischung 1 durch die Behandlung mit der Beschleuniger-Lösung keine Beeinträchtigung erfahren hat. Mischung 3 zeigt einen ähnlichen Verlauf, jedoch unterhalb der Kurve von Mischung 2, im übrigen mit deutlich abfallenden Reversionswerten bei fortdauernder Wärmebehandlung nach Abschluß der Vulkanisation mit Erreichen des höchsten Kurvenpunktes.

Das wesentliche Ergebnis dieses Tests ist jedoch der Beweis, daß die Mischung 2 keine Beeinträchtigung in

7

**0 142 664**

den Reversionsigenschaften gegenüber Mischung 1 zeigt und daß auch keine Übervulkanisation eintritt.

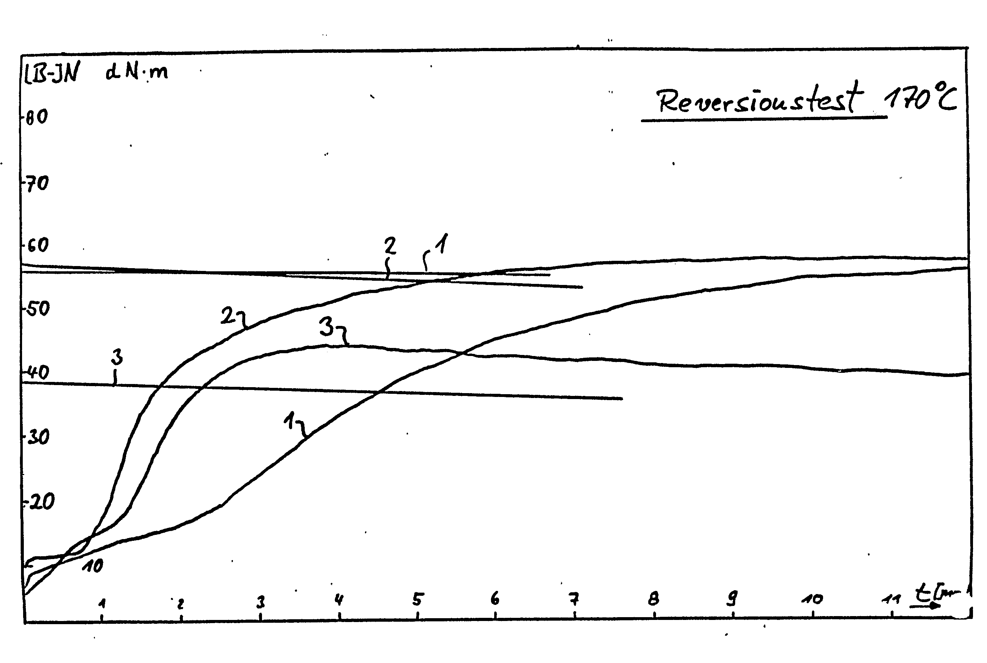

**Patentansprüche**

1. Verfahren zum Erneuern des Laufstreifens eines abgefahrenen Luft- oder Vollgummireifens und zugleich zum Erneuern oder Reparieren beschädigter Gürtel der Karkasse des Reifens, bei dem die beschädigten Gürtel oder Gürtelteile von der Karkasse entfernt und ersetzt werden und auf die vorbereitete Karkasse eine Schicht aus Bindekautschuk und auf diese ein vorgefertigter Gummilaufstreifen als Ganzes oder segmentweise aufgebracht wird, gasförmige Einschlüsse zwischen den aufgebrachten Schichten vermieden oder abgeführt werden und der so vorbereitete Rohling zum Vulkanisieren der Bindekautschukschicht in einem Überdruckraum einer Druck- und Wärmebehandlung bei einer Temperatur von ca. 50-95°C und bei einem Druck von ca. 5-6 bar unterworfen wird, dadurch gekennzeichnet, daß

mindestens ein Abschnitt eines an sich für die Heißerneuerung bestimmten, mit Rohgummi überzogenen Gürtels durch ein- oder mehrmaliges Auftragen einer auf den Bindekautschuk abgestimmten Beschleunigerlösung behandelt wird, mit der der Rohgummiüberzug des Gürtels für die Vulkanisation unter den für die Vulkanisation des Bindekautschuks zur Anwendung kommenden, vorstehend genannten Druck- und Wärmebedingungen umgewandelt wird, oder daß ein Abschitt eines in dieser Weise bereits vorbehandelten und zwischengelagerten Gürtels verwendet wird,

der so vorbereitete Abschnitt mit einer Bindekautschukeinbettung versehen und an der Stelle des oder der entfernten Gürtel(s) auf die Karkasse aufgebracht wird, und hierauf der Schichtaufbau aus der Bindekautschukschicht und dem Laufstreifen gebildet und der Rohling nachfolgend der genannten Druck- und Wärmebehandlung zwecks Vulkanisation sowohl der Bindekautschukschicht als auch der Bindekautschukeinbettung und des Rohgummiüberzugs des oder der Gürtel(s) ausgesetzt wird.

2. Verfahren nach Anspruch 1, dadurch gekennzeichnet, daß der Bindekautschuk der Bindekautschukschicht unterhalb des Laufstreifens und der Einbettung des Abschnitts des Gürtels im wesentlichen folgende Zusammensetzung aufweist:

| | |
|---|---|
| Naturkautschuk oder SBR oder Polybutadyn oder Verschnitt oder eine Mischung aus den vorgenannten Stoffen | 100,00 Gew.Teile |
| Kieselsäure und Ruß | 30-80 Gew.Teile |
| Weichmacher | 5-10 Gew.Teile |
| Schwefel und Schwefelspender | 0,8-4,5 Gew.Teile |
| Alterungsschutzmittel | 0,8-4,0 Gew.Teile |
| Beschleuniger | 0,5-3,5 Gew.Teile |
| Koresin | 1,0-15,0 Gew.Teile |

und daß die Beschleunigerlösung im wesentlichen folgende Zusammensetzung aufweist:

| | |
|---|---|
| 1000 gr. | Reintoluol |
| 20-240 gr. | Beschleuniger I (Tetramethylthiuram monosulfid) |
| 10-180 gr. | Beschleuniger II (N,N'-Diphenylthioharnstoff) |
| 0-300 gr. | Schwefel-normal |
| 0-500 gr. | Alterungsschutzmittel (N-Phenyl-N'isopropyl-p-phenylendiamin wie 4010 NA der Farbenfabriken Bayer). |

3. Verfahren nach Anspruch 2, dadurch gekennzeichnet, daß die Beschleunigerlösung folgende Zusammensetzung aufweist:

| | |
|---|---|
| 1000 gr. | Reintoluol |
| 120 gr. | Beschleuniger I |
| 60 gr. | Beschleuniger II |
| 30 gr. | Schwefel-normal |
| 180 gr. | Alterungsschutzmittel 4010 NA. |

4. Verfahren nach Anspruch 2 oder 3, dadurch gekennzeichnet, daß die Beschleunigerlösung nach ihrer Herstellung im gewichtsbezogenen Verhältnis von 10 : 80 mit Reintoluol verdünnt wird.

5. Mit Rohgummi überzogener Gürtel, der für die Gürtelerneuerung oder -Reparatur an Reifenkarkassen im Rahmen eines Heißerneuerungsverfahrens ausgelegt ist, dadurch gekennzeichnet, daß der Gürtel mit einer Beschleunigerlösung behandelt ist, mit der der Rohgummi des Gürtels derart umwandelbar ist, daß er mittels einer für eine Vulkanisation eines in der Kalterneuerung verwendeten Bindekautschuks üblichen Druck- und Wärmebehandlung bei ca. 50-95°C und 5-6 bar vulkanisierbar ist.

6. Gürtel nach Anspruch 5, dadurch gekennzeichnet, daß der Bindekautschuk und die Beschleunigerlösung die in Anspruch 2 angegebene Zusammensetzung haben.

7. Gürtel nach Anspruch 6, dadurch gekennzeichnet, daß die Beschleunigerlösung die in Anspruch 3 angegebene Zusammensetzung hat.

8. Gürtel nach einem der Ansprüche 5 bis 7, dadurch gekennzeichnet, daß der Gürtel ein- oder beidseitig mit einer 0,5 bis 2,0 mm dicken Bindekautschukschicht belegt belegt ist.

9. Verfahren zum Herstellen von Reparaturpflastern mit Gürteleinlage für Reifen, die an der Reparaturstelle der Karkasse aufgelegt und in einem Arbeitsgang allein oder mit dem übrigen Schichtaufbau gemeinsam, falls die Karkasse gleich zeitig auch erneuert wird, abgeheizt werden bei einer Temperatur von ca. 50-95°C und bei einem Druck von ca. 5-6 bar, dadurch gekennzeichnet, daß mindestens ein Abschnitt eines mit Rohgummi überzogenen und an sich zur Verarbeitung unter Heißerneuerungsbedingungen bestimmten Gürtels mit einer Beschleunigerlösung, die der in Anspruch 2 oder 3 angegebenen entsprechen kann, behandelt und, gegebenenfalls nach einer Zwischenlagerung, an einer Seite mit einer Bindekautschukschicht, deren Zusammensetzung der in Anspruch 2 angegebenen entsprechen kann, verbunden wird.

10. Verfahren nach Anspruch 9, dadurch gekennzeichnet, daß bei der Herstellung des Pflasters mehrere Abschnitte bis zum Erreichen der gewünschten Pflasterstärke übereinander gelegt werden.

11. Verfahren nach Anspruch 9 oder 10, dadurch gekennzeichnet, daß zwischen die Abschnitte jeweils eine Bindekautschukschicht gelegt wird.

12. Verfahren nach einem der Ansprüche 9 bis 11, dadurch gekennzeichnet, daß das Pflaster an der anderen Seite mindestens am Rand mit Bindekautschukbelegt wird.

## Claims

1. A method of renewal of the tread of a worn down pneumatic or solid rubber tyre and at the same time of renewal or repair of damaged plies in the carcase of the tyre, in which the damaged plies or parts of the plies are removed from the carcase and replaced and there is applied to the prepared carcase one layer of bonding rubber and to the latter a prefabricated rubber tread as a whole or in segments, gaseous inclusions between the applied layers being avoided or led away and for the vulcanization of the layer of bonding rubber the half-finished tyre so prepared is subjected in a high-pressure chamber to a pressure-and-heat treatment at a temperature of about 50 - 95°C and at a pressure of about 5 - 6 bar,

characterized in that

at least one portion of one raw-rubber-coated ply intended in itself for the hot renewal is treated by a single or multiple application of an accelerator solution matched to the bonding rubber, by which under the aforesaid conditions of pressure and heat being used for the vulkanization of the bonding rubber the raw rubber coating on the ply is converted for the vulcanization, or that one portion of one ply already pretreated in this way and stored intermediately is employed, the so prepared portion is provided with an embedding of bonding rubber and applied to the carcase in the place of the removed ply or plies and then the laminar build-up is formed from the layer of bonding rubber and the tread and the half-finished tyre is subsequently exposed to the aforesaid pressure-and-heat treatment for the purpose of vulcanization of both the layer of bonding rubber and the embedding of bonding rubber and the raw rubber coating of the ply or plies.

2. A method as in Claim 1, characterized in that the bonding rubber of the layer of bonding rubber underneath the tread and the embedding of the portion of the ply exhibits essentially the following composition:

Natural rubber
or SBR or polybutadiene
or a blend or a
mixture of the aforesaid
substances: 100.00 parts by wt.
Silica and carbon black: 30-80 parts by wt.
Softener: 5-10 parts by wt.
Sulphur and sulphur donors: 0.8-4.5 parts by wt.
Anti-oxidant: 0.8-4.0 parts by wt.
Accelerator 0.5-3.5 parts by wt.
Koresin 1.0-15.0 parts by wt.

and that the accelerator solution exhibits essentially the following composition:

1000 gr.     of pure toluene;
20-240 gr.   of accelerator I (tetramethylthiurammonosulphide);
10-180 gr.   of accelerator II (N, N'-diphenylthiocarbamine);
0-300 gr.    of standard sulphur;
0-500 gr.    of anti-oxidant (N-phenyl-N'-isopropyl-p-phenylene-
             diamine such as 4010 NA from Farbenfabriken Bayer).

3. A method as in Claim 2, characterized in that the accelerator solution exhibits the following composition:

1000 gr.   of pure toluene;
120 gr.    of accelerator I;
60 gr.     of accclerator II;
30 gr.     of standard sulphur;
180 gr.    of anti-oxidant 4010 NA.

4. A method as in Claim 2 or 3, characterized in that the accelerator solution after its production is diluted in the ratio by weight of 10:80 with pure toluene.

5. A ply coated with raw rubber, which is designed for the renewal or repair of the plies in tyre carcases within the frame of a hot renewal process, characterized in that the ply is treated with an accelerator solution by which the raw rubber of the ply may be converted in such a way that it may be vulcanized by means of a pressure-and-heat treatment at about 50-95°C and 5-6 bar as usual for the vulcanization of a bonding rubber employed in the cold renewal.

6. A ply as in Claim 5, characterized in that the bonding rubber and the accelerator solution have the composition specified in Claim 2.

7. A ply as in Claim 6, characterized in that the accelerator solution has the composition specified in Claim 3.

8. A ply as in one of the Claims 5 to 7, characterized in that the ply is covered on one or both sides with a layer of bonding rubber 0.5 to 2.0 mm thick.

9. A method of production of repair patches having ply inlays for tyres, which are laid on the place of repair on the carcase and in only one working step or together with the remaining laminar buildup in the event that the carcase is also at the same time being renewed, are heated at a temperature of about 50-95°C and at a pressure of about 5-6 bar, characterized in that at least one portion of one ply coated with raw rubber and intended in itself for processing under hot renewal conditions, is treated with an accelerator solution which may correspond with that specified in Claim 2 or 3 and if necessary after intermediate storage is bonded at one side by a layer of bonding rubber the composition of which may correspond with that specified in Claim 2.

10. A method as in Claim 9, characterized in that in the production of the patch a number of portions are laid one above the other until the desired thickness of patch is reached.

11. A method as in Claim 9 or 10, characterized in that between each of the portions one layer of bonding rubber is laid.

12. A method as in one of the Claims 9 to 11, characterized in that the patch is covered on the other side at least at the edge with bonding rubber.

## Revendications

1. Procédé de rechapage de la surface de roulement d'un pneu ou d'un bandage plein usé et permettant en même temps le renouvellement ou la réparation de la ceinture abîmée de la carcasse du pneu qui consiste à enlever et remplacer la ceinture ou les éléments de ceinture abîmés de la carcasse et à appliquer à la carcasse préparée une couche de caoutchouc de liage sur laquelle est déposée, en totalité ou par segments, une bande de roulement en caoutchouc préfabriquée, en évitant ou en éliminant les inclusions de gaz entre les couches appliquées, et à soumettre l'ébauche ainsi préparée, en vue de la vulcanisation de la couche de liage, dans une enceinte à surpression, à un effort de compression et à un traitement thermique à une température d'environ 50 à 95°C et à une pression d'environ 5 à 6 bars, <u>caractérisé par le fait</u> qu'au moins une section de la ceinture revêtue de caoutchouc brut adaptée en soi aurechapage à chaud est traitée par une ou plusieurs applications d'une solution accélératrice adaptée au caoutchouc de liage qui transforme le revêtement de caoutchouc brut de la ceinture pour la vulcanisation dans les conditions d'application de pression et de traitement thermique précitées prévues pour la vulcanisation du caoutchouc de liage, ou que l'on utilise une section d'une ceinture qui a déjà subi un traitement préalable de ce genre et qui est ensuite intercalée, que la section ainsi préparée est encastrée dans du caoutchouc de liage et appliquée sur la carcasse à la place de la ou des ceinture(s) enlevée(s), qu'ensuite la structure stratifiée est constituée à partir de la couche de caoutchouc de liage et de la bande de roulement, et qu'enfin l'ébauche est soumise à l'effort de compression et au traitement thermique précités en vue de la vulcanisation de la couche de caoutchouc de liage aussi bien que de l'encastrement de caoutchouc de liage et du revêtement de caoutchouc brut de la ou des ceinture(s).

2. Procédé selon la revendication 1, caractérisé par le fait que le caoutchouc de liage de la couche de caoutchouc de liage en dessous de la bande de roulement et de l'encastrement de la section de la ceinture présente essentiellement la composition suivante:

| | |
|---|---|
| Caoutchouc naturel ou SBR ou polybutadiène ou un coupage ou un mélange des substances précitées | 100,00 parties en poids |
| acide silicique et suie | 30 à 80 parties en poids |
| plastifiant | 5 à 10 parties en poids |
| soufre et composés générateurs de soufre | 0,8 à 4,5 parties en poids |
| antivieillisseur | 0,8 à 4,0 parties en poids |
| accélérateur | 0,5 à 3,5 parties en poids |
| corésine | 1,0 à 15,0 parties en poids; |

et que la solution accélératrice présente essentiellement la composition suivante:

| | |
|---|---|
| 1000 g | de toluéne pur |
| 20 à 240 g | d'accélérateur I (monosulfure de tétraméthylthiurame) |
| 10 à 180 g | d'accélérateur II (N,N'-diphényl-thio-urée) |
| 0 à 500 g | de soufre normal |
| 0 à 500 g | d'antivieillisseur (N-phényl-N'isopropyl-p-phénylénediamine, par exemple 4010 NA des Farbenfabriken Bayer). |

3. Procédé selon la revendication 2, caractérisé par le fait que la solution accélératrice présente la composition suivante:

| | |
|---|---|
| 1000 g | de toluéne pur |
| 120 g | d'accélérateur I |
| 60 g | d'accélérateur II |
| 30 g | de soufre normal |
| 180 g | d'antivieillisseur 4010 NA. |

4. Procédé selon la revendication 2 ou 3, caractérisé par le fait que la solution accélératrice est diluée, après sa préparation, avec du toluène pur dans le rapport pondéral de 10:80.

5. Ceinture revêtue de caoutchouc brut conçue pour le renouvellement ou la réparation de la ceinture de la carcasse de pneu dans le cadre d'un procédé de rechapage à chaud, caractérisé par le fait que la ceinture est traitée avec une solution accélératrice permettant une transformation du caoutchouc brut de la ceinture de telle façon qu'il peut être vulcanisé au moyen de l'application d'un effort de compression et d'un traitement thermique à environ 50 à 95°C et 5 à 6 bars tels qu'ils sont mis en oeuvre habituellement pour la vulcanisation d'un caoutchouc de liage utilisé pour le rechapage à froid.

6. Ceinture selon la revendication 5, caractérisé par le fait que le caoutchouc de liage et la solution accélératrice présentent la composition indiquée dans la revendication 2.

7. Ceinture selon la revendication 6, caractérisé par fait que la solution accélératrice présente le composition indiquée dans la revendication 3.

8. Ceinture selon l'une des revendications 5 à 7, caractérisé par le fait qu'elle est enduite sur une ou sur les deux faces d'une couche de caoutchouc de liage d'une épaisseur de 0,5 à 2,0 mm.

9. Procédé de fabrication d'emplâtres de réparation avec protecteur intérieur de ceinture pour pneumatiques qui sont appliqués sur l'endroit de la réparation de la carcasse et qui sont chauffés en une seule opération, seuls ou conjointement avec le reste de la structure de couches, au cas où la carcasse est renouvelée en même temps, à une température d'environ 50 à 95°C et à une pression de 5 à 6 bars, caractérisé par le fait qu'au moins une section d'une ceinture revêtue de caoutchouc brut et adaptée en soi à un traitement dans les conditions du renouvellement à chaud est traitée avec une solution accélératrice qui peut correspondre à celle indiquée dans l'une des revendications 2 ou 3, et qui est combinée sur l'une des faces, le cas échéant après un entreposage, avec une couche de caoutchouc de liage dont la composition peut correspondre à celle indiquée dans la revendication 2.

10. Procédé selon la revendication 9, caractérisé par le fait que, lors de la réalisation de l'emplâtre, plusieurs sections sont superposées jusqu'à ce que l'épaisseur désirée de l'emplâtre soit atteinte.

11. Procédé selon la revendication 9 ou 10, caractérisé par le fait qu'une couche de caoutchouc de liage est interposée à chaque fois entre les sections.

12. Procédé selon l'une des revendications 9 à 11, caractérisé par le fait que l'autre face de l'emplâtre est recouverte, au moins au bord, de caoutchouc de liage.

Reversionstest 170°C

LB-JN dN·m

0 142 664